# EUROPEAN PATENT SPECIFICATION

(11) **EP 1 531 960 B1**
(45) Date of publication and mention of the grant of the patent: **01.07.2009**
(21) Application number: 03771108.2
(22) Date of filing: 24.07.2003
(51) Int. Cl.: B23K 13/00, B23K 20/00, B23K 20/02

(54) **FORGE WELDING OF TUBULARS**
SCHMIEDESCHWEISSEN VON ROHREN
SOUDAGE A LA FORGE DE MATERIEL TUBULAIRE

(30) Priority: 25.07.2002 EP 02255188
(43) Date of publication of application: 25.05.2005
(73) Proprietor: SHELL INTERNATIONALE RESEARCH MAATSCHAPPIJ B.V., 2596 HR Den Haag (NL)
(72) Inventor: ANDERSON, Mark, Wilson, NL-2288 GD Rijswijk (NL); DEN BOER, Johannis, Josephus, NL-2288 GD Rijswijk (NL); COLE, Anthony, Thomas, NL-2288 GD Rijswijk (NL); DIMITRIADIS, Klisthenis, NL-2288 GD Rijswijk (NL); VOLLEBREGT, Jan, Erik, NL-2288 GD Rijswijk (NL); ZIJSLING, Djurre, Hans, NL-2288 GD Rijswijk (NL)
(86) International application number: PCT/EP2003/008263
(87) International publication number: WO 2004/011183

(56) References cited:
- EP-A- 0 405 881
- EP-A- 1 167 852
- WO-A-98/33619
- WO-A1-96/00628
- DE-A- 3 628 246
- GB-A- 1 552 660
- GB-A- 2 190 722
- US-A- 4 566 625
- US-A- 4 669 650
- US-A- 4 675 728
- US-A- 4 679 448
- US-A- 4 736 084
- US-A- 5 770 832

## Description

The invention relates to a method for forge welding of tubulars.

Forge welding involves circumferential heating of the pipe ends that are to be joined and subsequently pressing the pipe ends together to form a metallurgical bond.

A large variety of heating technologies may be used to make the pipe ends hot enough such that the metallurgical bond can be made. The heating techniques may involve electric, electromagnetic, induction, infrared, sparking and/or friction heating or combinations of these and other heating methods.

When used in this specification the term forge welding is intended to encompass all techniques which involve circumferential heating of pipe ends and subsequent metallurgical bonding the heated pipe ends, including welding techniques that are generally known as fusion or diffusion welding, friction welding, and/or flash butt welding.

It is known from US patents 4,566,625 ; 4,736,084 ; 4,669,650 and 5,721,413 issued to Per H. Moe that it may be beneficial to flush the pipe ends just before and during the forge welding operation with a reducing flushing gas, such as hydrogen or carbon monoxide, such that any oxygen skin is removed from the heated pipe ends and a metallurgical bond with a minimal amount of irregularities is obtained. It is also known from US patents 2,719,207 and 4,728,760 to use non explosive mixtures comprising about 95% by volume of a substantially insert gas, such as argon, nitrogen and/or helium, and about 5% by volume of a reducing gas, such as hydrogen and/or carbon monoxide for flash welding and induction butt welding.

Experiments have shown that forge welding techniques are capable to generate high quality metallurgical bonds between the joined tubular ends, in particular if the tubular ends are flushed with a reducing flush gas mixture during the welding operation.

US-A-4 566 625 discloses a method of welding pipes whereby during heating and pressing together of the pipes the joint is supplied with a reducing gas via a connecting conduit.

US-A-5 770 832 discloses an electrical resistance welding process for pipeline materials, whereby the rate of post-weld cooling is controlled in order to obtain a desired microstructure.

GB-A-1 552 660 relates to arc welding to form a steel pipe, whereby bead layers are formed on opposite sides of a weld zone and whereby the weld is cooled in two stages, i.e. from the welding temperature to 800°C within 11 seconds, and from 800°C to 500°C within 60 seconds.

DE 36 28 246 relates to a forge welding method, wherein the cooling of the weld is retarded in order to avoid formation of martensite and/or bainite.

EP-A-1 167 852 discloses a method of bonding metal pipes by diffusion welding whereby the pipes have an inclined interface relative to the radial direction.

EP-A-0 405 881 discloses an inspection apparatus for internally inspecting a tubular member, whereby a beam of radiant energy is projected through a window provided in the apparatus.

US-A-4 675 728 discloses an inspection apparatus for internally inspecting piping, the apparatus including a frame provided with a television camera to scan an arcuate field of view about the internal surface of the piping.

GB-A-2 190 722 discloses an inspection apparatus for internally inspecting of piping, comprising a television camera having an optical portion and a physically separated electronics portion interconnected by a flexible coupling.

US-A-4 679 448 discloses an inspection apparatus for internally inspecting a tubular member adapted to generate electronic measurement signals and to convert said signals into corresponding optical signals.

WO 98/33619 discloses an amorphous bonding process for joining pipe ends, wherein a body of amorphous material is melted to create upon cooling a metallurgical bond between the pipe ends, said process being performed in a sealed chamber filled with an inert gas.

It is an object of the present invention to further improve forge welding of tubulars such that an improved quality of the forge welded connection is obtained.

### Summary of the Invention

In accordance with the invention there is provided a method of forge welding tubular ends, wherein the tubular ends are heated to a predetermined temperature above 1200 degrees Celsius and surrounded by a hydrogen containing shield gas when the tubular ends are pressed together, the method comprising cooling down the forge welded tubular ends from said temperature above 1200 to 600 degrees Celsius or below within 3 minutes after the forge welding operation, wherein the step of cooling down the tubular ends comprises providing a split ring collar around the welded area the split ring collar being movable between an open position and a closed position, and wherein quench medium is pumped through a flow passage of the split ring collar, the flow passage extending in circumferential direction of the split ring collar.

Optionally, the forge welded tubulars comprise a high carbon steel grade and are cooled down from above 1200 to at most 600 degrees Celsius within one minute after the forge welding operation.

In a preferred embodiment the forge welded tubulars are cooled by flushing the tubular ends with cold liquid nitrogen, helium, argon or liquid carbon dioxide.

The forge welding method may be used to join a large variety of steels and alloys including stainless steels and pipeline steels. The method according to the invention is particularly suitable for joining oil country tubular goods (OCTGs) for which controlled cooling and/or post weld heat treatment is often required to be done at remote locations. OCTGs are generally made of a group of steels that are suitable for use as downhole well casings and production tubings in the oil industry and are specified by international standard ISO 11960 and American standard API 5CT. With the exceptions of two grades, which contain significant quantities of chromium, these materials are carbon steels.

Historically OCTG materials have been joined using threaded couplings and this has avoided any requirement for them to be welded. As a consequence high strength OCTG materials contain relatively high levels of carbon and manganese and are considered "unweldable" using traditional fusion welding technology. However the materials can be welded using forge-welding techniques such as shielded active gas, friction welding and flash butt welding, because these are solid-state processes in which joining occurs at relatively low temperatures.

Unfortunately the metallurgy of high carbon steel grades requires that special steps are often necessary to allow the best combination of properties to develop after forge welding, particularly with respect to impact properties. In general a controlled rapid cool down of the welded tubular ends will minimize the heat affected zone and will ensure that acceptable properties are achieved following forge welding.

In addition a particular requirement has been identified for those welding techniques that take place in dry reducing gas or gas mixtures (eg. shielded active gas forge welding) to ensure that the welding area is kept free of water and heavy hydrocarbons. This limits the use of traditional water and oil based cooling quenching fluids in the particular application and requires alternative quenching media.

When high carbon steels are cooled from the fully austenitic state (eg. the welding temperature) in air they are inclined to adopt a structure consisting of martensite with a small amount of relatively brittle bainite. This can lead to acceptable bend and strength characteristics but low impact resistance. To avoid formation of any relatively brittle phases it is necessary to rapidly cool the steel from a fully austenitic structure (typically 900 - 700° Celsius depending on the steel being used) to approximately 300° Celsius within a short time, typically 1 minute.

During manufacture of OCTGs containing high levels of carbon it is standard practice to improve mechanical properties by heating into the fully austenitic region and quenching into a forced circulating water bath to obtain a fully martensitic structure. This treatment is followed by heating at approximately 600° Celsius for a predetermined amount of time, often several hours, to produce a tempered martensitic structure with appropriate, acceptable mechanical properties. This process is called quenching and tempering (Q&T).

The present invention solves the problem of the heat treatment requirements and equipment for producing forge welds in high strength high carbon OCTG steels with acceptable impact properties. Several embodiments of an internal spear that is inserted into the interior of the tubulars in the welding zone may be used to control the cool down process of the forge welded tubular ends depending on the steel grades of the tubulars and the particular circumstance of the weld.

In addition the internal spear may be utilized for a variety of other functions, such as alignment of the tubulars, sealing off the interior of the tubulars in the welding zone and control of the quality of the forge weld by an electromagnetic acoustic transmission (EMAT) or other automated weld inspection technique.

Water, water based, oil and oil based quench media may be used with forge welding techniques such as flash butt welding and various means of friction welding which do not require a dry welding environment. In specific applications, such as on a rig, conventional oil field fluids such as mud and brine may also be used as quenching media.

With processes where a dry environment is needed these media may also be used.provided quenching is carried out internally. However with a wall thickness in excess of approximately 5 mm, when external quenching is also required, they are not ideal because they may slow down the welding process while the area is allowed to dry or require a second station to avoid contamination of the weld station or require a self contained quenching facility to prevent contamination of the welding area and this may be complex to construct. In order to avoid these drawbacks alternative safe quench media may be used. These include helium, nitrogen, argon and other non-flammable, volatile mixtures that will evaporate quickly following use or various combinations of these.

### Brief Description of the Drawings

Preferred embodiments of the method according to the invention will be described in more detail with reference to the accompanying drawings, in which :
Fig.1 is a schematic cross-sectional view of an external shield gas chamber in which a cold fluid is injected during the cool down phase after a forge welding operation; and
Fig.2 is a longitudinal sectional view of an internal spear via which a cooling fluid is injected towards the forge welded tubular ends after the forge welding operation.

### Detailed description of the invention

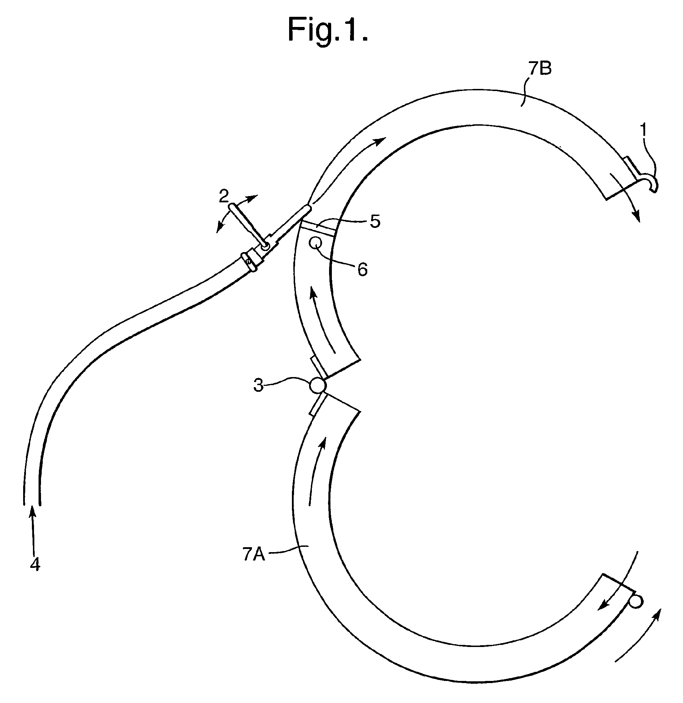

In its simplest variant, in-situ quenching of welds can take place externally using a portable collar 7A, 7B as indicated in Fig.1 using quench media, such as liquid nitrogen, argon, carbon dioxide or an aqueous liquid. The collar 7A, 7B shown in Fig.1 is manufactured with a hinged fastening 3 and an inside diameter to match a particular pipe outer diameter (OD). The collar 7A, 7B thus forms a split ring which, when closed, will fully encircle the welded area of pipe and fasten around it using the fastener 1. In operation the welded area is fully encircled with the split ring that is fastened with 1, a supply of quench media is available through the supply hose 4 and is released into the interior of the split ring collar 7A, 7B by opening the valve 2. Quench media circulates through the split ring collar 7A, 7B until it reaches the baffle 5 whereupon it exits via a drain hole 6.

This split ring collar 7A, 7B is applied and quenching started, as soon as possible after welding and, in any event, before the weld area can cool below the austenising temperature of the steel being joined (typically 900 to 700 ° Celsius depending on carbon content).

The split ring collar 7A, 7B may be integrated into a gas shielding chamber or hood into which a reducing shield gas comprising about 95 vol% nitrogen and about 5 vol% hydrogen may be injected during the forge welding operation or integrated with the heating mechanism with little modification.

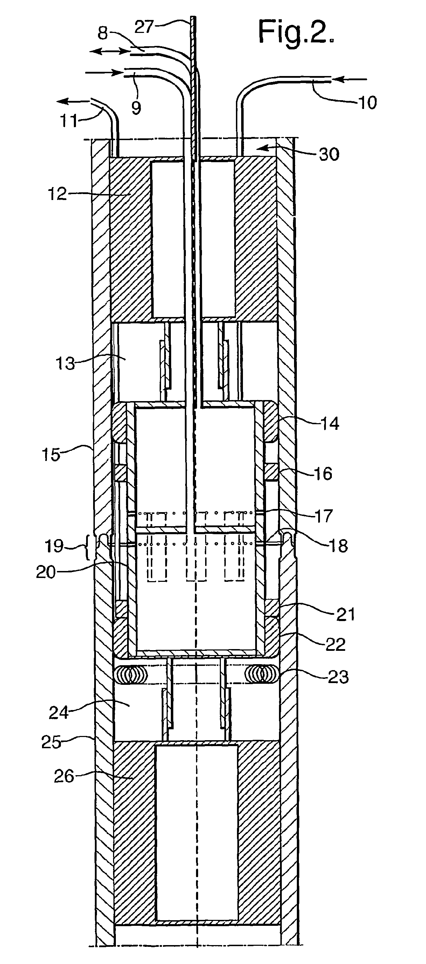

For thicker wall tubes, where the cooling rate may vary significantly through the wall, external quenching may need to be used in conjunction with internal quenching using an internal spear 30 as illustrated in Fig.2. This is principally dependant on the metallurgy of the steel in question, particularly carbon content, and the quench media employed. For standard OCTG materials through-wall cooling to approximately 300° C is preferably be done in approximately 1 minute.

For certain applications, such as thin wall tube and low carbon steel it is possible to quench the steel from a fully austenitic structure to fully martensitic using an internal spear 30 as shown in Fig.2 as an alternative to external quenching as shown in Fig.1. Further, for thicker steel sections and higher carbons steels it is necessary to use a combination of internal and external quenching to ensure even and rapid cooling across the pipe wall.

The spear 30 is inserted into the interior of an upper pipe 15 and a lower pipe 25 in the region of the forge welded pipe ends 19.

The spear 30 may comprise a number of elements which may be used conjointly or in isolation. The major elements of the spear 30 shown in Fig. 2 are a support cable string 27 for deployment and retrieval and data and power lines, shield and/or cooling fluid supply and discharge hoses 8, 9 hydraulic fluid supply and discharge hoses 10, 11, expandable gripping elements 12, 26, compression elements 13, 24 to draw the upper and lower sections of the spear 30 together and provide axial forge force, EMAT inspection probe assemblies 14, 22, inflatable gas sealing elements 16, 22 to allow isolation of weld area 19 to flush with a non-oxidising and/or reducing shield gas, outlet nozzles 17 for flushing gas and/or cooling fluid from inside of pipe and return nozzles 18 for shield gas and/or cooling fluid. The internal spear 30 incorporates ferrite bars 20 to provide additional control for high frequency current and induction heating, and an induction coil 23 for provision of heat for forge and/or post weld heat treatment.

It should be noted that not all of these elements may need to appear in every spear 30 but that any combination of the elements described above is possible. In addition, alternative-heating elements incorporating pairs of contacts positioned above and below the weld area 19 for heating using eg. resistance are also options.

With some forms of forge welding the internal spear will require additional detailing to facilitate objectives such as provision of flushing gas, alignment, pressure isolation, to influence heating etc in addition to the requirement to supply quench media. These are described in more detail below.

The internal spear 30 may be used horizontally, for pipelines/pipework, or vertically inside a well casing and tubing. It may be positioned in the upper pipe 15 before the pipe 15 is moved on top of the lower pipe 25 into position for welding or inserted into the interior of the aligned pipes 15, 25 immediately prior to welding.

The spear 30 is suspended from a supporting cable string 27, for insertion and retrieval, that runs through the upper pipe 15 to be welded. One end of the fluid supply and discharge hoses 8, 9 terminates outside of the upper pipe 15 at a station that provides cooling and/or shield gas media through a pump; the other end is fastened inside a cylindrical housing of the spear 30 which, for some forms of forge welding, such as shielded active gas and flash butt welding, is required to be non-metallic. The spear 30 is sized to drift through the pipes 15, 25 being joined. The spear 30 has equi-spaced cooling nozzles 18 embedded around it's tubular central portion in which the ferrite bars 20 are embedded. The number and size of nozzles 18 is dependent on the size of the housing, which is determined by the internal diameter ID of the pipes 15, 25 being joined, the cooling media and pump capacity.

The gripping elements 12, 26 on both sides of the spear 30 ensure that it remains approximately equidistant from the pipe walls.

Immediately after the forge weld has been made, quench media is pumped through the supply hose 8 and out through the nozzles 18 to cool the welding zone 19 rapidly. If necessary this is done simultaneously with external quenching by means of the split collar 7A, 7B shown in Fig.1.

The spear 30 may fulfill several functions when used in conjunction with a number of forge welding processes, such as provision of flushing gas to improve weld quality and optional low pressure sealing ability to isolate the weld area and subsequent provision of quenching media to improve mechanical properties

The flushing gas may be a non-oxidising or non-explosive reducing gas comprising about 95 vol% Nitrogen and about 5 vol % hydrogen . Non-oxidizing gases may be required when using flash butt welding, induction heated forge welding, friction welding or a combination of these methods such as thermo-kinetic welding for example. A reducing gas or gas mixture may be required when using shielded active gas forge welding or induction heated forge welding for example.

The ferrite bars 20 serve to improve the heating effect of induction and resistance/induction heating

The split external cooling collar 7A, 7B shown in Fig.1 and the internal spear 30 shown in Fig.2 are appropriate to a range of welding processes such as friction welding, flash butt welding, shielded active gas welding etc. whenever post weld heat treatment is required. Heating for tempering purposes may be carried out from inside the pipe, from outside the pipe or in combination. Combined heating may be particularly effective in the case of thick wall pipe (pipe wall thickness approximately >5 mm).

Whenever tempering is carried out in a hazardous area it is necessary to ensure compliance with safety conditions. This may be accomplished using a variety of well-known techniques such as provision of a non-flammable blanket gas and a double walled hermetically sealed explosion resistant shield gas chamber.

The internal spear 30 shown in Fig.2 may have an integral induction-heating coil 23 that is centred over the weld area and powered through an umbilical cable. Where the spear 30 includes components such as injection nozzles 18 and/or ferrite bars 20 then the induction coil 23 may be installed in a secondary housing and moved into position over the weld area immediately prior to use. The relatively through-wall nature of induction heating allows tempering of a fully martensitic structure in a comparably short time, usually no longer than 4 minutes depending on the precise metallurgy of the welded area.

An additional external heating coil (not shown), which is well documented technology, may be centered over the weld area 19 using spacers as indicated, and powered to allow tempering. The external heating coil may consist of a split ring embedded in the split collar 7A, 7B shown in Fig.1 or may consist of a fully encircling coil. Where the proximity of the coil to metallic fixtures around the weld station are likely to cause extraneous heating then the coil is positioned some short distance form the weld station. When welding is done in a sealed chamber formed by the collar 7A,7B containing shield gases, whether they are non-oxidising or reducing, then it is preferred to position the coil inside this chamber.

The relatively through-wall nature of induction heating allows tempering of a fully martensitic structure in a comparably short time, usually no longer than 4 minutes depending on the precise metallurgy of the welded area.

For thick wall pipes 15,25 it may be preferable to heat using a combination of internal and external coils in an internal spear 30 and external collar 7A, 7B to ensure even heating across the pipe wall. In this variation both coils are powered independently and simultaneously.

The internal spear 30 shown in Fig.2 may have resistance heating contacts (not shown) located circumferentially around its periphery equidistant above and below the welding zone 19. Current, typically 400 Amps, is passed between these contacts through an umbilical cable to heat through electrical resistance. Heating is controlled by an optical or contact pyrometer located inside or outside the pipe that is in a control loop which regulates the passage of current.

Where the spear 30 includes components, such as injection nozzles 18 and/or ferrite bars 20, then the resistance contacts will be installed in a secondary housing attached to the primary housing and moved into position over the weld area 19 immediately prior to use. The relatively through-wall nature of resistance heating allows tempering of a fully martensitic structure in a comparably short time, usually no longer than 4 minutes depending on the precise metallurgy of the welded area 19.

Optionally, external electrical contacts may be positioned above and below the welding zone 19 in the configuration described in Fig.2. Where the proximity of the external contacts to metallic fixtures around the weld station are likely to cause extraneous heating then the contacts may be positioned some short distance from the weld station and moved into position as and when required. When welding is done in a sealed chamber containing shield gases, whether they are non-oxidising or reducing, then it is preferred to position the contacts inside this chamber.

The relatively through-wall nature of resistance heating allows tempering of a fully martensitic structure in a comparably short time, usually no longer than 4 minutes depending on the precise metallurgy of the welded area.

For thick.wall pipes 15, 25 it may be preferable to heat the pipe ends 19 using a combination of internal and external contacts to ensure even heating across the pipe wall. In this variation both sets of contacts are powered independently and simultaneously.

Certain applications of welded tubulars require nondestructive testing of the weld prior to use. In these applications inspection probes 14, 22, such as conventional ultrasonic, EMAT or other probes may be incorporated into the internal spear 30 as appropriate.

It may be beneficial for certain materials being welded using forge welding to be heat treated prior to use to improve.their mechanical or corrosion properties. In these instances a heating device such as the heating coil 23 shown in Fig.2 may be incorporated into the spear housing or added as an accessory in an additional housing. Particularly with smaller diameter pipes 15,25 this heating device may be used as the primary heating device for forge welding.

In certain circumstances, especially with larger diameter tubulars, gripping and compression devices 12,14,22,26 may also be incorporated into the internal spear 30. This has the advantage that an additional external device, such as the split collar 7A, 7B shown in Fig.1, is not required, so that the spear 30 can be employed to forge weld tubulars downhole in a well.

## Claims

1. A method of forge welding tubular ends, wherein the tubular ends (15, 25) are heated to a predetermined temperature above 1200 degrees Celsius and surrounded by a hydrogen containing shield gas when the tubular ends (15, 25) are pressed together, the method comprising cooling down the forge welded tubular ends (15, 25) from said temperature above 1200 to 600 degrees Celsius or below within 3 minutes after the forge welding operation, wherein the step of cooling down the tubular ends (15, 25) comprises providing a split ring collar (7A, 7B) around the welded area the split ring collar (7A, 7B) being movable between an open position and a closed position, and wherein quench medium is pumped through a flow passage of the split ring collar (7A, 7B), the flow passage extending in circumferential direction of the split ring collar (7A, 7B).

2. The method of claim 1, wherein the forge welded tubulars comprise a high carbon steel grade and are cooled down from the austenising temperature of the steel or above to approximately 300 degrees Celsius within one minute.

3. The method of claim 1 or 2, wherein the quench medium is cold liquid nitrogen or liquid carbon dioxide.

4. The method of any preceding claim, wherein the temperature of the tubular ends (15, 25) is monitored at least during the cool down phase by monitoring the colour and/or intensity of the light emitted by the tubular ends and wherein the tubular ends (15, 25) are simultaneously heated by electric and/or electromagnetic heating during at least part of the cool down phase in order to establish a predetermined cool down rate.

5. The method of any preceding claim, wherein the tubulars are oilfield tubulars.

6. The method of any preceding claim, wherein the tubulars and forge welded tubular ends (15, 25) are radially expanded by an expansion tool, such as a conical mandrel, to a larger inner and outer diameter.

7. The method of any preceding claim, wherein the weld is inspected using a device incorporated into an internal spear (30) as an integral part of that spear (30) or as an accessory contained in a separate housing.

8. The method of any preceding claim wherein compression forces required to accomplish forge welding are supplied by gripping elements (12, 26) mounted on an internal spear (30).

9. The method of any preceding claim, wherein heating for forging and/or post weld heat treatment is accomplished using a heating device (23) incorporated into an internal spear (30).

10. The method of any preceding claim, wherein the tubulars are part of a casing while drilling assembly and the forge welded tubulars form a pipe string which carries an expandable drill bit and is gradually extended by forge welding a tubular on top of the pipe string, and wherein the pipe string remains in the drilled hole as a casing after completion of the drilling operations.

## Patentansprüche

1. Verfahren zum Schmiedeschweißen von Rohrenden, bei welchem die Rohrenden (15, 25) auf eine vorbestimmte Temperatur oberhalb 1200 Grad Celsius und von einem wasserstoffhaltigen Abschirmgas umgeben werden, wenn die Rohrenden (15, 25) aneinandergepreßt werden, wobei das Verfahren das Abkühlen der schmiedegeschweißten Rohrenden (15, 25) von dieser Temperatur oberhalb 1200 auf 600 Grad Celsius oder darunter innerhalb von drei Minuten nach dem Schmiedeschweißvorgang umfaßt, wobei der Schritt des Abkühlens der Rohrenden (15, 25) das Bereitstelen eines geteilten Ringkragens (7A, 7B) um die geschweißte Zone umfaßt, wobei der geteilte Ringkragen (7A, 7B) zwischen einer Offenstellung und einer Schließstellung bewegbar ist, und wobei ein Abschreckmedium durch einen Strömungsdurchgang des geteilten Ringkragens (7A, 7B) gepumpt wird, wobei sich der Strömungsdurchgang in Umfangsrichtung des geteilten Ringkragens (7A, 7B) erstreckt.

2. Verfahren nach Anspruch 1, bei welchem die schmiedegeschweißten Rohre die Qualität eines Hochkohlenstoffstahls aufweisen und von der austenitischen Temperatur des Stahls oder darüber auf etwa 300 Grad Celsius innerhalb einer Minute abgekühlt werden.

3. Verfahren nach Anspruch 1 oder 2, bei welchem das Abschreckmedium kalter flüssiger Stickstoff oder flüssiges Kohlendioxid ist.

4. Verfahren nach einem der vorhergehenden Ansprüche, bei welchem die Temperatur der Rohrenden (15, 25) zumindest während der Abkühlphase überwacht wird, indem die Farbe und/oder Intensität des von den Rohrenden emittierten Lichtes überwacht wird, und wobei die Rohrenden (15, 25) während zumindest eines Teiles der Abkühlphase gleichzeitig durch elektrische und/oder elektromagnetische Erhitzung erhitzt werden, um eine vorbestimmte Abkühlgeschwindigkeit zu erzielen.

5. Verfahren nach einem der vorhergehenden Ansprüche, bei welchem die Rohre Ölfeldrohre sind.

6. Verfahren nach einem der vorhergehenden Ansprüche, bei welchem die Rohre und die schmiedegeschweißten Rohrenden (15, 25) durch ein Expansionswerkzeug, wie einen konischen Dorn, radial auf einen größeren Innen- und Außendurchmesser expandiert werden.

7. Verfahren nach einem der vorhergehenden Ansprüche, bei welchem die Schweißung unter Verwendung einer Vorrichtung inspiziert wird, die in einer inneren Lanze (30) als in-tegraler Teil dieser Lanze (30) oder als Zubehör, das in einem separaten Gehäuse enthalten ist, eingebaut ist.

8. Verfahren nach einem der vorhergehenden Ansprüche, bei welchem die Druckkräfte, die erforderlich sind, um die Schmiedeschweißung auszuführen, durch Greifelemente (12, 26) aufgebracht werden, die auf einer inneren Lanze (30) montiert sind.

9. Verfahren nach einem der vorhergehenden Ansprüche, bei welchem das Erhitzen für die Schmiede- und/oder Nachschweißbehandlung unter Verwendung einer Heizvorrichtung (23) ausgeführt wird, die in einer inneren Lanze (30) eingebaut ist.

10. Verfahren nach einem der vorhergehenden Ansprüche, bei welchem die Rohre Teil einer Auskleidung einer Bohranordnung sind und die schmiedegeschweißten Rohre einen Rohrstrang bilden, welcher ein expandierbares Bohrstück trägt und graduell durch Schmiedeschweißen eines Rohres an die Oberseite des Rohrstranges verlängert wird, und wobei der Rohrstrang nach dem Beenden der Bohrvorgänge als Auskleidung in dem gebohrten Loch verbleibt.

## Revendications

1. Procédé de soudage à la forge d'extrémités d'éléments tubulaires, dans lequel les extrémités des éléments tubulaires (15, 25) sont chauffées à une température prédéterminée supérieure à 1200 degrés Celsius et sont entourées par un gaz de protection contenant de l'hydrogène lorsque les extrémités des éléments tubulaires (15, 25) sont pressées ensemble, le procédé comprenant le refroidissement des extrémités des éléments tubulaires soudées à la forge (15, 25) à partir de ladite température supérieure à 1200 degrés Celsius jusqu'à 600 degrés Celsius, ou moins, en un laps de temps de 3 minutes après l'opération de soudage à la forge, dans lequel l'étape de refroidissement des extrémités des éléments tubulaires (15, 25) comprend l'application d'un collier annulaire fendu (7A, 7B) autour de la région soudée, le collier annulaire fendu (7A, 7B) étant mobile entre une position ouverte et une position fermée, et dans lequel un milieu de trempe est pompé à travers un passage d'écoulement du collier annulaire fendu (7A, 7B), le passage d'écoulement s'étendant dans la direction circonférentielle du collier annulaire fendu (7A, 7B).

2. Procédé selon la revendication 1, dans lequel les éléments tubulaires soudés à la forge comprennent une nuance d'acier à haute teneur en carbone et sont refroidis à partir de la température d'austénitisation de l'acier ou supérieure à approximativement 300 degrés Celsius en un laps de temps d'une minute.

3. Procédé selon la revendication 1 ou 2, dans lequel le milieu de trempe est de l'azote liquide froid ou du dioxyde de carbone liquide.

4. Procédé selon l'une quelconque des revendications précédentes, dans lequel la température des extrémités des éléments tubulaires (15, 25) est surveillée au moins pendant la phase de refroidissement en surveillant la couleur et/ou l'intensité de la lumière qui est émise par les extrémités des éléments tubulaires, et dans lequel les extrémités des éléments tubulaires (15, 25) sont chauffées simultanément par un chauffage électrique et/ou électromagnétique pendant au moins une partie de la phase de refroidissement dans le but d'établir une vitesse de refroidissement prédéterminée.

5. Procédé selon l'une quelconque des revendications précédentes, dans lequel les éléments tubulaires sont des éléments tubulaires pour champs pétrolifères.

6. Procédé selon l'une quelconque des revendications précédentes, dans lequel les éléments tubulaires et les extrémités des éléments tubulaires soudées à la forge (15, 25) sont dilatés radialement par un outil de dilatation, tel qu'un mandrin conique, jusqu'à obtenir un plus grand diamètre intérieur et un plus grand diamètre extérieur.

7. Procédé selon l'une quelconque des revendications précédentes, dans lequel la soudure est inspectée en utilisant un dispositif qui est incorporé dans un harpon interne (30) en tant que partie intégrale de ce harpon (30), ou comme un accessoire contenu dans un boîtier séparé.

8. Procédé selon l'une quelconque des revendications précédentes, dans lequel les forces de compression requises pour accomplir le soudage à la forge sont fournies par des éléments de pince (12, 26) qui sont montés sur un harpon interne (30).

9. Procédé selon l'une quelconque des revendications précédentes, dans lequel le chauffage pour le soudage à la forge et/ou le traitement thermique post-soudage est accompli en utilisant un dispositif de chauffage (23) qui est incorporé dans un harpon interne (30).

10. Procédé selon l'une quelconque des revendications précédentes, dans lequel les éléments tubulaires font partie d'un ensemble de cuvelage pendant le forage, et les éléments tubulaires soudés à la forge forment un train de tubes qui porte un trépan de forage expansible qui est graduellement expansé par le soudage à la forge d'un élément tubulaire au sommet des tubes, et dans lequel le train de tubes reste dans le trou foré en tant que cuvelage après l'achèvement des opérations de forage.
